# FASCICULE DE BREVET EUROPEEN

(11) **EP 2 650 173 B1**
(45) Date de publication et mention de la délivrance du brevet: **07.11.2018**
(21) Numéro de dépôt: 13162572.5
(22) Date de dépôt: 05.04.2013
(51) Int. Cl.: B60Q 1/068

(54) **Dispositif d'éclairage et/ou de signalisation comprenant un moyen de réglage optimisé**
Beleuctungs- und/oder Signalvorrichtung mit einer verbesserten Verstelleinrichtung
Lighting and/or signalling device comprising an optimised adjusting mechanism

(30) Priorité: 11.04.2012 FR 1253296
(43) Date de publication de la demande: 16.10.2013
(73) Titulaire: Valeo Vision Belgique, 7822 Meslin l'Evêque (BE)
(72) Inventeur: Herbin, Cyril, 59530 POTELLE (FR); Maliar, Rémi, 59880 SAINT SAULVE (FR)

(56) Documents cités:
- EP-A2- 1 873 445
- WO-A1-2009/076438
- DE-A1- 19 546 271
- US-A1- 2004 090 792

## Description

Le secteur technique de la présente invention est celui des dispositifs d'éclairage et/ou de signalisation pour véhicule automobile. Plus particulièrement, il vise une conception simplifiée de ce dispositif qui peut néanmoins être ajusté en hauteur, afin notamment de régler une coupure générée par ce dispositif d'éclairage et/ou de signalisation.

On connait du document EP0580496A1 un dispositif de réglage d'un projecteur. Ce dernier autorise un mouvement entre une partie fixe et un réflecteur coopérant avec une source de lumière et une glace de diffusion. L'orientation du dispositif de réglage par rapport au projecteur implique une liaison mécanique entre la partie fixe et le réflecteur situé à l'opposé du dispositif de réglage. L'assemblage de ce projecteur est ainsi rendu complexe.

Par ailleurs, la partie fixe et le réflecteur sont étanchés par un joint. Or, le mouvement entre cette partie fixe et de ce réflecteur n'est pas favorable à la bonne tenue de ce joint, ce qui se traduit à long terme par un défaut d'étanchéité du projecteur.

Enfin, un tel projecteur nécessite un écrou destiné à coopérer avec une vis et devant être monté sur la partie fixe. Un tel écrou doit donc, dans un premier temps, être vissé sur la vis de réglage puis, dans un deuxième temps, être rapporté sur la partie fixe du projecteur. Une telle structure et une telle méthode d'assemblage sont génératrices de coûts.

Le document FR2951117A1 divulgue un dispositif de réglage de la position d'une première partie d'un dispositif d'éclairage et/ou de signalisation par rapport à une deuxième partie de ce dispositif. La première partie est formée par un réflecteur et la deuxième partie est une platine de fixation du dispositif d'éclairage sur un véhicule. Le dispositif de réglage comprend une vis en liaison mécanique avec le réflecteur et en liaison hélicoïdale avec la platine de fixation. Ainsi, une translation de la vis opérée lors de sa mise en rotation entraîne un mouvement du réflecteur.

Bien que satisfaisant à certains égards, un tel dispositif de réglage présente des inconvénients. En premier lieu, on constate que, lors du réglage, la vis se déplace selon un mouvement de translation par rapport à la platine de fixation, cette dernière étant solidaire du véhicule. L'accès à cette vis change donc en fonction du réglage effectué et ceci n'est pas satisfaisant.

En second lieu, le préréglage effectué lors de l'assemblage du réflecteur sur la platine de liaison implique l'emploi d'une butée qui vise à définir la position de la vis par rapport à la platine de fixation au moment où la vis est assemblée sur la platine de fixation. Une telle méthode de préréglage mérite d'être améliorée.

Enfin, le montage de la vis sur la platine de fixation s'opère selon un mouvement complexe. En effet, il est nécessaire d'incliner la vis pour entrer la tête de cette dernière dans un arceau, puis d'opérer un mouvement de rotation et atteindre une position de fixation. Un tel processus est compliqué, ce qui gène son automatisation.

Le but de la présente invention est donc de résoudre les inconvénients décrits ci-dessus principalement en concevant un dispositif d'éclairage et/ou de signalisation, en particulier destiné à générer un éclairage additionnel de type longue portée ou antibrouillard, qui comprend un arbre rendu solidaire d'un support mais qui agit sur le réflecteur monté mobile, afin d'ajuster la position angulaire de celui-ci vis-à-vis du support.

Un dispositif d'éclairage et/ou de signalisation selon le préambule de la revendication 1 est connu de DE 195 46 271.

L'invention a donc pour objet un dispositif d'éclairage et/ou de signalisation selon la revendication 1, comprenant un support et un bloc optique monté pivotant autour d'un axe par rapport audit support, un dispositif de réglage du bloc optique par rapport au support comprenant un arbre sur lequel est ménagé un filetage, ledit arbre étant relié au support par une liaison pivot et s'étendant selon une direction orthogonale à l'axe de pivotement du bloc optique par rapport au support, ledit bloc optique comprenant une conformation qui coopère avec le filetage de l'arbre.

Selon l'invention, le bloc optique présente au moins un réflecteur qui comprend un moyen de réception d'une source lumineuse, ladite conformation étant ménagée sur une paroi externe du réflecteur. De la sorte, le bloc optique forme un sous ensemble distinct du support et qui peut être fabriqué et pré-assemblé indépendamment.

Selon l'invention, la conformation est une fourchette délimitée par une paroi interne sur laquelle est ménagé un taraudage en prise avec le filetage. La fourchette présente une section en forme de « U » et la paroi interne de cette section, en particulier les deux branches du « U », porte une denture qui s'insère sur le filetage de l'arbre. Selon l'invention, la fourchette présente une ouverture, permettant de clipper la conformation sur le filetage de l'arbre selon un mouvement de direction orthogonale à la direction de l'arbre. Ainsi, on peut clipper aisément la conformation sur le filetage de l'arbre selon un mouvement de direction orthogonale à la direction de l'arbre. Selon une réalisation, la longueur de taraudage formée sur les deux branches du « U » est supérieure au diamètre de l'arbre.

Selon une autre caractéristique de l'invention, l'arbre est maintenu par rapport au support par au moins un premier palier, ledit premier palier prenant la forme d'un trou ménagé dans le support. Un tel trou est entouré périphériquement par le support et son accès n'est possible que par un mouvement parallèle à l'axe du trou. L'assemblage de l'arbre dans le support est ainsi facilité.

Selon encore une caractéristique de l'invention, l'arbre est maintenu par rapport au support par un deuxième palier formé par au moins deux demi-paliers opposés l'un à l'autre par rapport à l'arbre. On assure ainsi une reprise d'effort de l'arbre qui présente un intérêt quand on manoeuvre l'arbre avec un outil orienté selon une direction orthogonale à la direction de l'arbre.

Selon encore une autre caractéristique de l'invention, le filetage est ménagé sur l'arbre entre le premier palier et le deuxième palier.

Avantageusement, l'arbre comprend un dispositif de verrouillage empêchant une translation de l'arbre vis-à-vis du support.

Dans un tel cas, le dispositif de verrouillage est formé par au moins une languette flexible solidaire de l'arbre et une butée toutes deux ménagées sur l'arbre. Avantageusement, l'arbre supporte deux languettes issues de matière avec l'arbre et qui s'étendent chacune selon une direction inclinée par rapport à la direction de l'arbre. Ces deux languettes sont par ailleurs opposées l'une à l'autre par rapport à l'arbre.

Avantageusement encore, l'arbre comprend un moyen de manoeuvre agencé pour être opéré selon une direction perpendiculaire à la direction d'extension de l'arbre.

Dans une telle situation, le moyen de manoeuvre est formé par un disque solidaire d'une extrémité de l'arbre, le disque étant délimité par au moins une face qui s'étend dans un plan perpendiculaire à la direction de l'arbre, ladite face recevant une pluralité de dents formant par exemple un engrenage ou une roue dentelée.

Selon un exemple de réalisation, le support comprend une première branche et une deuxième branche qui débouchent d'un fond constitutif du support et s'étendent selon une direction parallèle à un axe optique du dispositif d'éclairage et/ou de signalisation.

Ainsi, le bloc optique comprend un réflecteur sur la paroi externe duquel est ménagé au moins un pion logé dans un trou, ledit trou étant ménagé à l'extrémité libre d'au moins une des branches.

Selon cet exemple de réalisation, cette structure permet de recevoir par clippage les deux pions dans les trous des branches. Ainsi, il est possible de clipper le réflecteur selon une direction parallèle à l'axe optique du dispositif d'éclairage et/ou de signalisation. Par exemple, la première branche et la deuxième branche peuvent présenter une flexibilité déterminée, de manière à ce que celles-ci puissent s'éloigner l'une de l'autre pour autoriser le logement de ces pions dans les trous.

Selon l'invention, la conformation est une fourchette délimitée par une paroi interne sur laquelle est ménagé un taraudage en prise avec le filetage. Cette fourchette présente une ouverture, permettant de clipper la conformation sur le filetage de l'arbre selon un mouvement de direction orthogonale à la direction de l'arbre, dans ce même mouvement. Ainsi dans l'exemple de réalisation du paragraphe précédent, il est possible de clipper dans un même mouvement selon une direction parallèle à l'axe optique du dispositif d'éclairage et/ou de signalisation à la fois le réflecteur sur son support et la fourchette sur le filetage de l'arbre. Le montage est plus simple. La flexibilité de l'ouverture de la fourchette et la flexibilité des branches logeant les pions peuvent être voisines, de manière à ce que le clippage du réflecteur sur les branches du support et de la fourchette sur l'arbre soient simultanés.

Selon une réalisation de l'invention, cette liaison entre les pions et les branches peut former une liaison pivot entre le bloc optique et le support ; par exemple le centre de ces trous est confondu avec l'axe de pivotement entre le bloc optique et le support.

La première branche et la deuxième branche sont solidaires du support, par exemple issues de matière avec le support quand celui-ci est fabriqué, notamment moulé.

Selon une réalisation de l'invention, l'extrémité libre de cette première branche et de cette deuxième branche comprend un trou, par exemple traversant, chaque branche comprenant un amincissement dans l'épaisseur ménagé entre le trou et l'extrémité libre de chaque branche.

Selon une réalisation de l'invention, les deux pions sont issus de matière avec le réflecteur au moment de sa fabrication, par exemple par moulage.

L'invention vise également un procédé d'assemblage d'un dispositif d'éclairage et/ou de signalisation comprenant l'une quelconque des caractéristiques évoquées ci-dessus, dans lequel :
- on translate l'arbre dans le support selon une direction rectiligne,
- on verrouille l'arbre dans le support au moyen d'un dispositif de verrouillage,
- on insère le bloc optique dans le support selon une direction perpendiculaire à la direction dans laquelle l'arbre s'étend,
- on solidarise le bloc optique sur le support et, simultanément, on met en prise la conformation sur le filetage.

La translation de l'arbre dans le support est rectiligne entre le moment où une extrémité de l'arbre pénètre dans le trou du support et le moment où cet arbre est bloqué par le dispositif de verrouillage. L'insertion du bloc optique intervient selon une position angulaire déterminée par rapport au support de manière à éviter tout ajustage supplémentaire du bloc optique une fois qu'il est monté sur le véhicule automobile.

Un tout premier avantage selon l'invention réside dans la simplicité de conception et d'assemblage d'un dispositif d'éclairage et/ou de signalisation selon l'invention.

Un autre avantage réside dans le maintien de la position de la zone de manoeuvre de l'arbre quelque soit la position angulaire du bloc optique par rapport au support.

L'invention permet de ménager la conformation et le filetage sur une longueur importante, ce qui permet absorber aisément les chaînes de tolérances des différents composants installés suivant l'axe optique.

Enfin, l'invention permet de supprimer des difficultés relatives à l'engrènement rencontrées dans les dispositifs de l'art antérieur.

D'autres caractéristiques, détails et avantages de l'invention ressortiront plus clairement à la lecture de la description donnée ci-après à titre indicatif en relation avec des dessins dans lesquels :
- la figure 1 est une vue en perspective et de face d'un dispositif d'éclairage et/ou de signalisation selon l'invention,
- la figure 2 est une vue arrière en perspective du dispositif d'éclairage et/ou de signalisation selon la figure 1,
- la figure 3 est un éclaté du dispositif d'éclairage et/ou de signalisation selon la figure 1,
- la figure 4 est une vue partielle en perspective montrant la coopération entre l'arbre et le bloc d'optique,
- la figure 5 est une vue partielle en perspective illustrant le blocage de l'arbre sur le support,
- la figure 6 est une vue montrant une première étape du procédé d'assemblage selon l'invention,
- la figure 7 est une vue montrant une deuxième étape du procédé d'assemblage selon l'invention,
- la figure 8 est une vue montrant une troisième étape du procédé d'assemblage selon l'invention,
- la figure 9 est une vue montrant un état final d'assemblage selon le procédé.

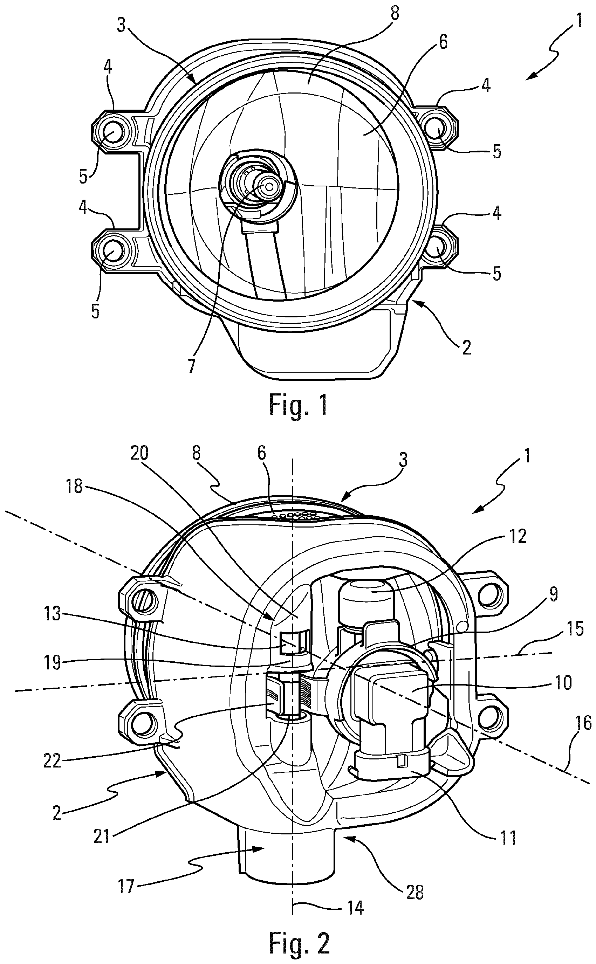

La figure 1 montre une vue de face d'un dispositif d'éclairage et/ou de signalisation 1 selon l'invention. Il comprend un support 2 et un bloc optique 3.

Le support 2 est un élément qui assure la fixation du dispositif d'éclairage et/ou de signalisation 1 sur un véhicule automobile, en particulier sur un bouclier avant équipant ce véhicule. A cet effet, le support 2 comprend une pluralité d'oeillets 4 qui se compte, dans cet exemple, au nombre de quatre. Chacun de ces oeillets comprend un orifice traversant 5 au travers duquel une vis de fixation en prise sur le bouclier peut être passée.

Le bloc optique 3 comprend un réflecteur 6 qui présente une forme générale de cuvelage. A une extrémité de ce réflecteur 6, on trouve une source lumineuse 7 solidarisée sur le réflecteur, par exemple, par l'intermédiaire d'un moyen de réception de la source lumineuse, non visible ici. La source lumineuse est, par exemple, une lampe à incandescence mais il peut également s'agir d'une lampe à gaz neutre, notamment de type Xénon. Enfin, on notera que cette source lumineuse peut être formée par une ou plusieurs diodes électroluminescentes.

A l'autre extrémité du réflecteur 6 par rapport à celle qui reçoit la source lumineuse 7, on trouve un élément dioptrique 8 qui prend, par exemple, la forme d'une lentille transparente dont la fonction est de focaliser les rayons lumineux générés par la source lumineuse 7 et reflétés par le réflecteur 6. Un tel élément dioptrique est, par exemple, réalisé en polycarbonate transparent. On comprend alors que le bloc optique comprend un volume interne délimité par la source lumineuse 7, qui s'étend dans ce volume interne, une paroi interne aluminée du réflecteur 6, et une paroi de l'élément dioptrique 8. Le récepteur 6 étant l'élément qui supporte la source lumineuse et l'élément dioptrique 8, le bloc optique 3 forme ainsi un élément indépendant et autonome vis-à-vis du support 2, avant que ce bloc optique 3 ne soit rapporté sur le support 2.

Le bloc optique 3 est ainsi agencé pour générer un faisceau lumineux à projeter sur la route empruntée par le véhicule, un tel faisceau présentant un axe optique sensiblement perpendiculaire au plan de la figure 1.

La figure 2 montre une partie arrière du dispositif d'éclairage et/ou de signalisation 1. On y voit l'élément dioptrique 8 fixé sur le réflecteur 6, cet ensemble étant reçu dans une portion creuse du support 2.

Le support 2 présente une forme générale en cuvette avec un fond évidé, de manière à y disposer l'extrémité du réflecteur 6 qui reçoit la source lumineuse.

Cette extrémité comprend un manchon 9 à l'intérieur duquel se loge le moyen de réception 10 de la source lumineuse, ce dernier présentant un connecteur électrique 11 en vue d'alimenter électriquement la source lumineuse. Un tel moyen de réception est, par exemple, un porte-ampoule.

Le manchon 9 comprend également un dispositif d'équilibrage de pression 12 qui interdit une entrée d'eau ou de poussières dans le volume interne du bloc optique 3, tout en autorisant un circulation d'air entre ce volume interne et le milieu environnant le dispositif d'éclairage et/ou de signalisation 1.

Le dispositif d'éclairage et/ou de signalisation 1 comprend encore un dispositif de réglage 28 destiné à ajuster la position angulaire du bloc optique 3 par rapport au support 2, notamment selon une variation angulaire de +/- 5°. Ce dispositif de réglage 28 comprend ainsi un arbre 13 enfilé dans le support 2 et une conformation 22 ménagée sur le bloc optique 3, une telle conformation coopérant avec l'arbre pour réaliser le réglage.

Le support 2 loge l'arbre 13. Celui-ci est rectiligne et s'étend selon une direction 14 perpendiculaire à l'axe optique, référencé ici 16, et perpendiculaire à un axe 15 de pivot entre le bloc optique 3 et le support 2.

L'arbre 13 est relié au support 2 par une liaison pivot, c'est-à-dire une interdiction de mouvement dans tous les axes à l'exception d'une rotation autour de la direction 14 empruntée par l'arbre 13.

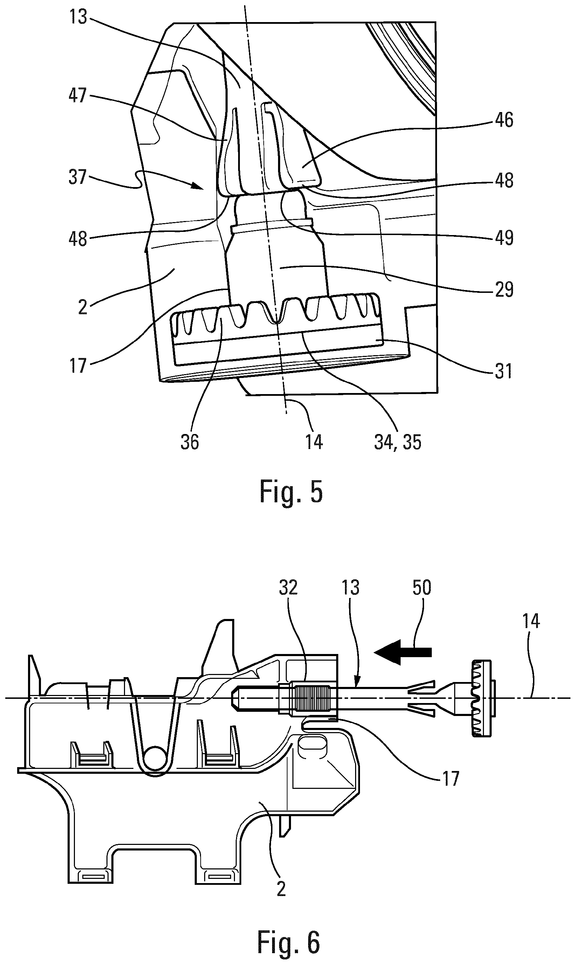

Cette liaison pivot est mise en oeuvre par au moins un palier ménagé sur le support 2 et par un dispositif de verrouillage, ce dernier étant détaillé à la description de la figure 5.

Dans cet exemple de réalisation, le support comprend un premier palier 17 et un deuxième palier 18. Ce dernier comprend deux demi-paliers opposés l'un à l'autre par rapport à l'arbre 13. Ainsi, un premier demi-palier 19 est formé par une portion circulaire du support qui s'étend sur un secteur angulaire limité à 180°. Le deuxième demi-palier est quant à lui disposé de manière immédiatement adjacente au premier demi-palier, mais décalé selon la direction 14 de l'arbre. Dans l'exemple de réalisation de la figure 2, le support 2 comprend un troisième demi-palier 20 qui jouxte le deuxième demi-palier et qui présente une structure identique à celle du premier demi-palier 19. Autrement dit, le deuxième palier 18 est formé par un cylindre qui présente une série de fenêtres, la partie de ce cylindre opposée à ces fenêtres formant le premier demi-palier 19, le deuxième demi-palier, et éventuellement le troisième demi-palier 20 quand le dispositif d'éclairage et/ou de signalisation 1 en est pourvu.

Cette figure 2 montre également la présence d'un filetage 21 ménagé sur la paroi externe de l'arbre 13 en prise avec la conformation 22 que comprend le bloc optique 3, plus particulièrement le réflecteur 6.

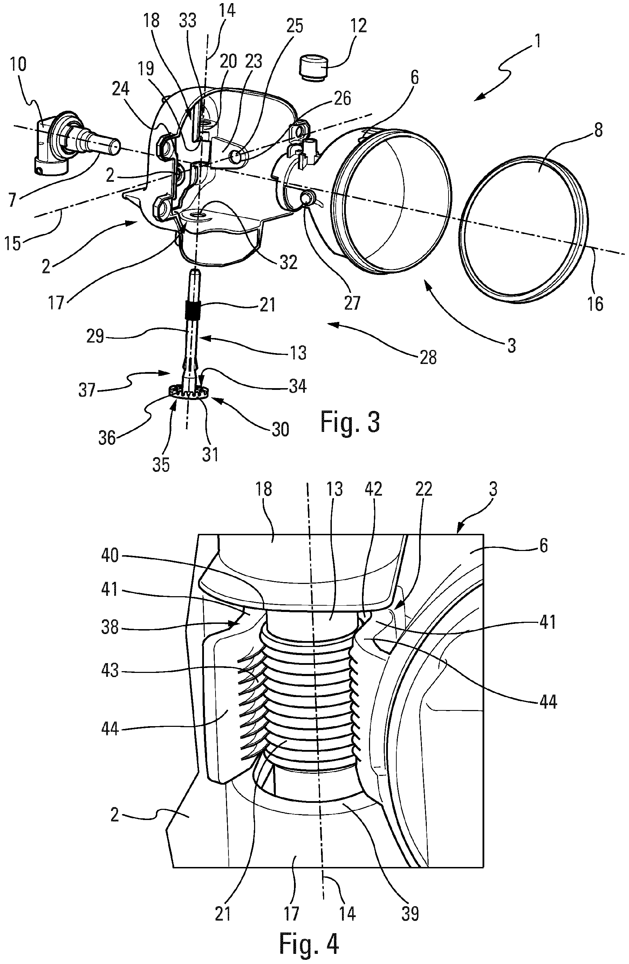

La figure 3 montre les pièces constitutives du dispositif d'éclairage et/ou de signalisation 1. La conception de celui-ci est particulièrement simple puisqu'il ne comporte que quatre composants assemblés entre eux pour former un dispositif d'éclairage et/ou de signalisation, avec fonction de réglage, prêt à être installé.

Ces quatre composants sont : la source lumineuse 7 et son moyen de réception 10 pré-assemblés, le support 2, l'arbre 13, le réflecteur 6, le dispositif d'équilibrage de pression 12 et l'élément dioptrique 8 formant un composant également pré-assemblé.

Le bloc optique 3 est monté pivotant autour de l'axe 15 par rapport au support 2. On comprend donc que le dispositif d'éclairage et/ou de signalisation 1 comprend une liaison pivot entre le bloc optique 3 et le support 2, la rotation de cette liaison pivot intervenant autour de l'axe 15. Cette liaison pivot entre le bloc optique 3 et le support 2 comprend une première branche 23 et une deuxième branche 24 solidaires du support 2, par exemple issues de matière avec le support 2 quand celui-ci est fabriqué, notamment moulé. Cette première branche 23 et cette deuxième branche 24 débouchent du fond constitutif du support 2 et s'étendent selon une direction parallèle à l'axe optique 16. Ces branches 23 et 24 présentent une flexibilité déterminée qui est mise en oeuvre par une épaisseur particulière de celles-ci.

A l'extrémité libre de cette première branche 23 et de cette deuxième branche 24, on trouve un trou 25 traversant, le centre de ces trous étant confondu avec l'axe 15 de pivotement entre le bloc optique 3 et le support 2. Chaque branche comprend enfin un amincissement 26 dans l'épaisseur ménagé entre le trou 25 et l'extrémité libre de chaque branche 23 et 24.

Une telle structure permet de recevoir par clippage deux pions, dont un seul référencé 27 est visible sur cette figure, ménagés sur une paroi externe du réflecteur 6. Le clippage est rendu possible par la flexibilité déterminée de la première branche 23 et de la deuxième branche 24, celles-ci pouvant ainsi s'éloigner l'une de l'autre pour autoriser le logement des pions dans les trous 25.

Les deux pions sont issus de matière avec le réflecteur 6 au moment de sa fabrication, par exemple par moulage. Ces pions sont ainsi diamétralement opposés par rapport à la forme circulaire prise par le réflecteur 6.

Comme évoqué plus haut, le support 2 comprend au moins le premier palier 17. Ce dernier prend la forme d'un trou 32 réalisé dans le support 2 et d'axe orthogonal à l'axe 15 de pivotement du bloc optique 3 vis-à-vis du support 2. Ainsi, la paroi du support, qui entoure le trou 32 sur toute la périphérie de celui-ci, reçoit l'arbre 13 et assure le blocage de l'arbre en toutes directions, à l'exception d'une rotation autour de la direction 14 dans laquelle l'arbre 13 s'étend.

Le deuxième palier 18 est également visible sur cette figure et il comprend, comme expliqué plus haut, le premier demi-palier 19, le deuxième demi palier référencé ici 33, et le troisième demi-palier 20.

En ce qui concerne l'arbre 13, celui-ci comprend une tige circulaire 29 sur la paroi externe de laquelle est ménagé le filetage 21. A une des extrémités de cet arbre 13, on trouve un moyen de manoeuvre 30. Un tel moyen de manoeuvre est agencé pour être opéré selon une direction perpendiculaire à la direction d'extension de l'arbre 13 et forme une interface entre un outil employé pour régler le dispositif d'éclairage et/ou de signalisation 1 et le moyen de réglage constitutif de ce dispositif.

Le moyen de manoeuvre 30 comprend un disque 31 solidaire d'une extrémité de l'arbre. Ce disque 31 s'étend dans un plan, par exemple, perpendiculaire à la direction 14 dans laquelle s'étend l'arbre 13.

Le disque 31 est délimité par une première face 34 et une deuxième face 35, la première face 34 étant celle tournée vers le filetage 21. L'une ou l'autre des ces faces, ou éventuellement les deux, comporte une pluralité de dents 36 réparties sur la face et à la périphérie du disque 31. Cette pluralité de dents 36 forme ainsi un engrenage qui peut être actionné par un outil, par exemple un tournevis cruciforme.

Cette figure 3 rend également apparent le fait que l'arbre 13 comprend un dispositif de verrouillage 37, dont la fonction est d'autoriser l'insertion de l'arbre 13 dans le premier palier 17 et le deuxième palier 18, tout en empêchant une translation de l'arbre 13 vis-à-vis du support 2 quand celui-ci est en butée contre le support, c'est-à-dire en position finale correspondant à une position d'utilisation du moyen de réglage.

La figure 4 est une vue qui montre le détail de la liaison mécanique opérée entre l'arbre 13 et le bloc optique 3. Entre le premier palier 17 et deuxième palier 18, l'arbre 13 comprend le filetage 21, celui-ci prenant la forme d'un filet hélicoïdal.

La conformation 22 est, par exemple, issue de matière avec le réflecteur 6 et forme une fourchette 38 ouverte sur la partie arrière du dispositif d'éclairage et/ou de signalisation. Cette fourchette 38 est formée par une paroi qui prend une forme en « U » et qui chevauche le filetage 21, une hauteur de cette fourchette selon la direction 14 étant, par exemple, supérieure à une hauteur du filetage 21 selon cette même direction. On notera néanmoins que la hauteur de cette fourchette 38 est déterminée pour laisser un premier jeu entre celle-ci et un bord 39 formé sur le support 2 à proximité du premier palier 17 et un second jeu entre cette fourchette 38 et un flanc 40 formé sur le support 2, au voisinage du deuxième palier 18. Cette structure garantit un déplacement selon la direction 14 pour l'orientation angulaire du bloc optique vis-à-vis du support 2. On notera enfin que ce bord 39 et ce flanc 40 forment des butées à l'égard de la conformation 28 de ce bloc optique 3. La conformation, en combinaison avec le flanc 40 ou le bord 39, forme un moyen de débrayage du dispositif de réglage 28. Ce dernier est actif sur une plage angulaire égale à +/- 5° et le moyen de débrayage devient actif au-delà de cette plage angulaire. La fourchette 38 s'ouvre de manière à sauter un filet du filetage quand celle-ci vient au contact du flan ou du bord.

La fourchette 38 comprend deux branches 41 et un fond 42, et la paroi interne des ces deux branches comporte un taraudage 43 dont les filets sont complémentaires aux filets du filetage 21. L'extrémité libre de chaque branche 41 présente une portion inclinée 44 dont la fonction est de faciliter l'insertion de la conformation 22 sur le filetage 21 de l'arbre 13. Selon l'exemple illustré, la longueur de taraudage 43 formée sur les deux branches du « U » est supérieure au diamètre de l'arbre 13, ceci permettant plus de tolérances dans le dimensionnement et l'assemblage des différents composants suivant l'axe optique 16 du module.

La figure 5 montre en détails la structure du dispositif de verrouillage de l'arbre 13 sur ou dans le support 2. On notera tout d'abord que ce dispositif de verrouillage est réversible. Autrement dit, l'arbre 13 est extractible du support 2 moyennant une intervention particulière sur le dispositif de verrouillage 37.

Celui-ci comprend au moins une languette flexible solidaire de l'arbre 13 et une butée 45 ménagée sur l'arbre 13 qui vient contre le support 2, par exemple contre le premier palier 17.

Dans cet exemple de réalisation, le dispositif de verrouillage comprend une première languette 46 et une deuxième languette 47. La paroi externe de ces deux languettes s'inscrit dans un cône. En d'autres termes, ces languettes sont reliées à l'arbre 13 à une première extrémité puis s'écartent de l'arbre 13 en suivant une direction inclinée par rapport à la direction 14 de l'arbre. L'extrémité libre de ces languettes 46 et 47 est ainsi à une distance de l'arbre et une tranche 48 de ces extrémités libres forme alors une butée qui vient en contact d'un premier bord 49 terminant le premier palier 17. Ainsi, cette tranche 48 empêche une sortie de l'arbre 13 par rapport au support 2.

Le moyen de verrouillage comprend encore la butée 45, dont la fonction est de limiter le déplacement de l'arbre 13 lors de l'insertion dans le support 2. Cette butée peut être réalisée de plusieurs manières mais dans l'exemple de la figure 5, cette butée 45 est formée par une portion de la face supérieure 34 du disque 31 formé sur l'arbre 13, cette portion s'étendant entre les dents 36 et la tige 29.

La distance qui sépare le flanc 48 de la butée 45 est adaptée à la longueur du premier palier 17, de sorte que lorsque l'arbre est en position finale, le filetage se trouve effectivement entre le bord 39 et le flanc 40 visibles sur la figure 4.

Les figures 6 à 9 illustrent les étapes nécessaires et suffisantes pour réaliser l'assemblage du dispositif d'éclairage et/ou de signalisation selon l'invention.

Préalablement ou en parallèle de ces étapes, on réalise un premier pré-assemblage de la source lumineuse sur le moyen de réception et un deuxième pré-assemblage du dispositif dioptrique, éventuellement du dispositif d'équilibrage de pression, sur le réflecteur et du sous-ensemble, préalablement constitué de la source lumineuse et du moyen de réception, sur le réflecteur.

La figure 6 montre la première étape d'assemblage du dispositif de réglage. Cette étape consiste en une insertion rectiligne selon la direction 14 de l'arbre 13 dans le support 2, plus particulièrement dans le trou 32 qui génère une surface de révolution formant le premier palier 17. Une telle insertion est illustrée par une flèche référencée 50.

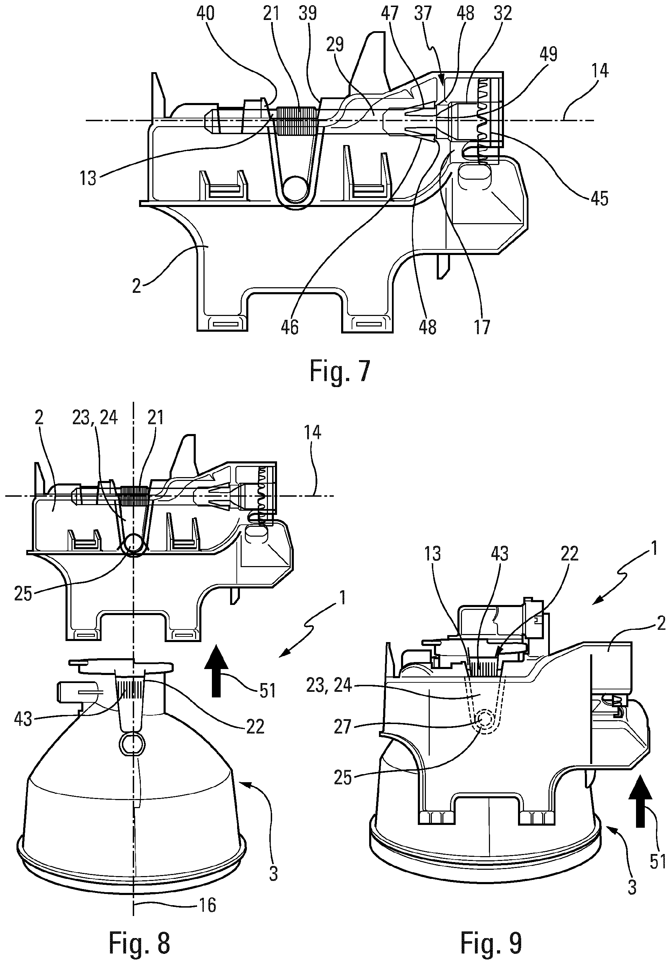

La figure 7 illustre le blocage de l'arbre 13 dans le support 2 au moyen du dispositif de verrouillage 37. Au passage dans le trou 32, les languettes 46 et 47 se rapprochent de la tige 29 tout en restant dans leurs domaines de flexibilité. Quand ces languettes 46 et 47 ont franchies le trou 32, elles reprennent une position écartée de la tige 29 et leur tranche 48 vient en contact contre le bord 49 délimitant le premier palier 17. Parallèlement à cette opération, la butée 45 vient en appui sur l'extrémité du premier palier 17 opposée au bord 49. A ce stade, le filetage 21 est logé entre le bord 39 et le flanc 40 du support 2.

La figure 8 montre la troisième étape qui vise à installer le bloc optique 3 sur le support 2. Le bloc optique 3 est déplacé selon un mouvement illustré par une flèche référencée 51, c'est-à-dire selon une direction parallèle à l'axe optique 16 et en direction du support 2. Cette translation est opérée jusqu'à mettre en contact les pions 27 contre l'extrémité libre des branches 23 et 24. A ce stade, les pions ne sont pas encore logés dans les trous 25, mais sont adjacents à ceux-ci alors que la conformation 22 vient entourer le filetage 21, mais sans que le taraudage 43 soit en prise sur le filetage 21.

La figure 9 illustre l'étape finale de solidarisation du bloc optique 3 sur le support 2. En poursuivant le déplacement du bloc optique 3 dans le sens symbolisé par la flèche 51, les pions 27 provoquent un écartement des branches 23 et 24. Les pions se logent ensuite dans les trous 25 ménagés à l'extrémité libre des branches 23 et 24 et, simultanément, le taraudage 43 vient en prise sur le filetage de l'arbre 13. Cette étape finale présente l'avantage de pouvoir orienter aisément le bloc optique 3 par rapport au support 2 dans une position angulaire qui correspond au réglage de base du dispositif d'éclairage et/ou de signalisation quand il est installé sur le véhicule. On évite ainsi un ajustement supplémentaire sur véhicule, ce qui représente un gain de temps.

## Revendications

1. Dispositif d'éclairage et/ou de signalisation (1) comprenant un support (2) et un bloc optique (3) monté pivotant autour d'un axe (15) par rapport audit support (2), un dispositif de réglage (28) du bloc optique (3) par rapport au support (2) comprenant un arbre (13) sur lequel est ménagé un filetage (21), ledit arbre (13) étant relié au support (2) par une liaison pivot et s'étendant selon une direction (14) orthogonale à l'axe (15) de pivotement du bloc optique (3) par rapport au support (2), ledit bloc optique (3) comprenant une conformation (22) qui coopère avec le filetage (21) de l'arbre (13),
dans lequel le bloc optique (3) présente au moins un réflecteur (6) qui comprend un moyen de réception (10) d'une source lumineuse (7), ladite conformation (2) étant ménagée sur une paroi externe du réflecteur (6), **caractérisé en ce que**
la conformation (22) est une fourchette (38) délimitée par une paroi interne sur laquelle est ménagé un taraudage (43) en prise avec le filetage (21), la fourchette présentant une ouverture permettant de clipper aisément ladite conformation (2) sur le filetage (21) de l'arbre (13) selon un mouvement de direction orthogonale à la direction de l'arbre lors du montage du bloc optique sur le support.

2. Dispositif selon la revendication 1, dans lequel la fourchette (38) présente une section en forme de « U », une paroi interne de cette section portant un taraudage (43) qui s'insère sur le filetage (21) de l'arbre (13).

3. Dispositif selon l'une quelconque des revendications 1 à 2, dans lequel l'arbre (13) est maintenu par rapport au support (2) par au moins un premier palier (17), ledit premier palier (17) prenant la forme d'un trou (32) ménagé dans le support (2).

4. Dispositif selon la revendication 3, dans lequel l'arbre (13) est maintenu par rapport au support (2) par un deuxième palier (18) formé par au moins deux demi-paliers (19, 20) opposés l'un à l'autre par rapport à l'arbre (13).

5. Dispositif selon la revendication 4, dans lequel le filetage (21) est ménagé sur l'arbre (13) entre le premier palier (17) et le deuxième palier (18).

6. Dispositif selon l'une quelconque des revendications 1 à 5, dans lequel l'arbre (13) comprend un dispositif de verrouillage (37) empêchant une translation de l'arbre (13) vis-à-vis du support (2).

7. Dispositif selon la revendication 6, dans lequel le dispositif de verrouillage (37) est formé par au moins une languette flexible (46, 47) solidaire de l'arbre (13) et une butée (45) ménagées sur l'arbre (13).

8. Dispositif selon l'une quelconque des revendications précédentes, dans lequel l'arbre (13) comprend au moins un moyen de manoeuvre (30) agencé pour être opéré selon une direction perpendiculaire à la direction (14) d'extension de l'arbre (13).

9. Dispositif selon la revendication 8, dans lequel le moyen de manoeuvre (30) est formé par un disque (31) solidaire d'une extrémité de l'arbre (13), le disque (31) étant délimité par au moins une face (34, 35) qui s'étend dans un plan perpendiculaire à la direction (14) de l'arbre (13), ladite face (34, 35) recevant une pluralité de dents (36).

10. Dispositif selon l'une quelconque des revendications précédentes, dans lequel le support (2) comprend une première branche (23) et une deuxième branche (24) qui débouchent d'un fond constitutif du support (2) et s'étendent selon une direction parallèle à un axe optique (16) du dispositif d'éclairage et/ou de signalisation (1).

11. Dispositif selon la revendication 10, dans lequel le bloc optique (3) comprend un réflecteur (6) sur la paroi externe duquel est ménagé au moins un pion (27) logé dans un trou (25), ledit trou étant réalisé à l'extrémité libre d'au moins une des branches (23, 24).

12. Procédé d'assemblage d'un dispositif d'éclairage et/ou de signalisation (1) selon l'une quelconque des revendications 1 à 11, dans lequel :
- on translate l'arbre (13) dans le support (2) selon une direction (14) rectiligne,
- on verrouille l'arbre (13) dans le support (2) au moyen d'un dispositif de verrouillage (37),
- on insère le bloc optique (3) dans le support (2) selon une direction (51) perpendiculaire à la direction (14) dans laquelle l'arbre s'étend,
- on solidarise le bloc optique (3) sur le support (2) et, simultanément, on met en prise la conformation (22) sur le filetage (21).

## Patentansprüche

1. Beleuchtungs- und/oder Signalvorrichtung (1), aufweisend eine Halterung (2) und einen optischen Block (3), derart montiert, dass er sich um eine Achse (15) im Verhältnis zur genannten Halterung (2) dreht, eine Verstelleinrichtung (28) des optischen Blocks (3) im Verhältnis zur Halterung (2), aufweisend eine Spindel (13), auf der ein Gewinde (21) ausgeführt ist, wobei die genannte Spindel (13) mit der Halterung (2) durch eine Drehverbindung verbunden ist und sich entsprechend einer Richtung (14) ausdehnt, die orthogonal zur Drehachse (15) des optischen Blocks (3) im Verhältnis zur Halterung (2) verläuft, wobei der genannte optische Block (3) eine Ausformung (22) aufweist, die mit dem Gewinde (21) der Spindel (13) zusammenarbeitet, bei der der optische Block (3) mindestens einen Reflektor (6) aufweist, der eine Aufnahmevorrichtung (10) einer Lichtquelle (7) aufweist, wobei die genannte Ausformung (2) auf einer Außenwand des Reflektors (6) ausgeführt ist, **dadurch gekennzeichnet, dass** die Ausformung (22) eine Gabel (38) ist, die durch eine Innenwand begrenzt wird, auf der ein Gewindegang (43) ausgeführt wird, der mit dem Gewinde (21) greift, wobei die Gabel eine Öffnung aufweist, die ermöglicht, die genannte Ausformung (2) bequem auf das Gewinde (21) der Spindel (13) zu befestigen, und zwar entsprechend einer Bewegung, die in orthogonaler Richtung im Verhältnis zur Richtung der Spindel bei der Montage des optischen Blocks auf der Halterung ausgeführt wird.

2. Vorrichtung nach Anspruch 1, bei der die Gabel (38) einen "U"-förmigen Querschnitt aufweist, wobei eine Innenwand dieses Querschnitts einen Gewindegang (43) aufweist, der sich in das Gewinde (21) der Spindel (13) einfügt.

3. Vorrichtung nach einem beliebigen der Ansprüche 1 bis 2, bei der die Spindel (13) im Verhältnis zur Halterung (2) durch mindestens ein erstes Lager (17) gehalten wird, wobei das genannte erste Lager (17) die Form eines Lochs (32) annimmt, das in der Halterung (2) ausgeführt wird.

4. Vorrichtung nach Anspruch 3, bei der die Spindel (13) im Verhältnis zur Halterung (2) durch ein zweites Lager (18) gehalten wird, geformt durch mindestens zwei Halblager (19, 20), die im Verhältnis zur Spindel (13) einander entgegengesetzt sind.

5. Vorrichtung nach Anspruch 4, bei der der Gewindegang (21) auf der Spindel (13) zwischen dem ersten Lager (17) und dem zweiten Lager (18) ausgeführt wird.

6. Vorrichtung nach einem beliebigen der Ansprüche 1 bis 5, bei der die Spindel (13) eine Verriegelungsvorrichtung (37) aufweist, die eine Verschiebung der Spindel (13) gegenüber der Halterung (2) verhindert.

7. Vorrichtung nach Anspruch 6, bei der die Verriegelungsvorrichtung (37) von mindestens einer flexiblen Lasche (46, 47), die fest mit der Spindel (13) verbunden ist, sowie einem Anschlag (45) gebildet wird, die auf der Spindel (13) ausgeführt werden.

8. Vorrichtung nach einem beliebigen der vorangehenden Ansprüche, bei der die Spindel (13) mindestens ein Betätigungshilfsmittel (30) aufweist, das derart angeordnet ist, dass es in perpendikulärer Richtung zur Ausdehnungsrichtung (14) der Spindel (13) bedient werden kann.

9. Vorrichtung nach Anspruch 8, bei der das Betätigungshilfsmittel (30) von einer Scheibe (31) gebildet wird, die fest mit einem Ende der Spindel (13) verbunden ist, wobei die Scheibe (31) von mindestens einer Seite (34, 35) abgegrenzt wird, die sich auf einer perpendikulären Ebene zur Richtung (14) der Spindel (13) ausdehnt, wobei die genannte Seite (34, 35) eine Vielzahl von Zinken (36) aufnimmt.

10. Vorrichtung nach einem beliebigen der vorangehenden Ansprüche, bei der die Halterung (2) einen ersten Zweig (23) sowie einen zweiten Zweig (24) aufweist, die aus einem Boden hervorkommen, der die Halterung (2) bildet, und die sich entsprechend einer parallelen Richtung zur optischen Achse (16) der Beleuchtungs- und/oder Signalvorrichtung (1) ausdehnt.

11. Vorrichtung nach Anspruch 10, bei der der optische Block (3) einen Reflektor (6) auf der Außenwand aufweist, welche mindestens einen Zapfen (27) ausführt, untergebracht in einem Loch (25), wobei das genannte Loch an einem freien Ende von mindestens einem der Zweige (23, 24) realisiert wird.

12. Montageverfahren einer Beleuchtungs- und/oder Signalvorrichtung (1) nach einem beliebigen der Ansprüche 1 bis 11, bei der:
- man die Spindel (13) in der Halterung (2) entsprechend einer geradlinigen Richtung (14) verschiebt,
- man die Spindel (13) in der Halterung (2) verriegelt, und zwar mithilfe einer Verriegelungsvorrichtung (37),
- man den optischen Block (3) in die Halterung (2) einfügt, und zwar entsprechend einer Richtung (51), die perpendikulär zur Richtung (14) verläuft, in der sich die Spindel ausdehnt,
- man den optischen Block (3) fest mit der Halterung (2) verbindet und man gleichzeitig die Ausformung (22) auf dem Gewinde (21) greifen lässt.

## Claims

1. Lighting and/or signalling device (1) comprising a support (2) and a lamp unit (3) mounted such that it can pivot about an axis (15) with respect to the said support (2), an adjusting device (28) for adjusting the lamp unit (3) with respect to the support (2) comprising a shaft (13) on which a screw thread (21) is formed, the said shaft (13) being connected to the support (2) by a pivot connection and extending in a direction (14) orthogonal to the axis (15) of pivoting of the lamp unit (3) with respect to the support (2), the said lamp unit (3) comprising a shaping (22) which engages with the screw thread (21) of the shaft (13),
in which the lamp unit (3) has at least one reflector (6) which comprises a receiving means (10) that accepts a light source (7), the said shaping (2) being formed on an external wall of the reflector (6),
**characterized in that**
the shaping (22) is a fork (38) delimited by an internal wall on which is formed a tapped thread (43) in mesh with the screw thread (21), the fork (38) having an opening allowing the said shaping (2) to be clipped easily onto the screw thread (21) of the shaft (13) in a movement the direction of which is orthogonal to the direction of the shaft during the fitting of the lamp unit on the support.

2. Device according to Claim 1, in which the fork (38) has a U-shaped section, one internal wall of this section bearing a tapped thread (43) which engages with the screw thread (21) of the shaft (13) .

3. Device according to either one of Claims 1 and 2, in which the shaft (13) is held with respect to the support (2) by at least one first bearing (17), the said first bearing (17) taking the form of a hole (32) formed in the support (2).

4. Device according to Claim 3, in which the shaft (13) is held with respect to the support (2) by a second bearing (18) formed by at least two half-bearings (19, 20) which are opposite one another on either side of the shaft (13).

5. Device according to Claim 4, in which the screw thread (21) is formed on the shaft (13) between the first bearing (17) and the second bearing (18).

6. Device according to any one of Claims 1 to 5, in which the shaft (13) comprises a locking device (37) preventing translational movement of the shaft (13) relative to the support (2).

7. Device according to Claim 6, in which the locking device (37) is formed of at least one flexible tab (46, 47) secured to the shaft (13) and a stop (45) both formed on the shaft (13).

8. Device according to any one of the preceding claims, in which the shaft (13) comprises at least one manipulating means (30) designed to be operated in a direction perpendicular to the direction (14) in which the shaft (13) extends.

9. Device according to Claim 8, in which the manipulating means (30) is formed of a disc (31) secured to one end of the shaft (13), the disc (31) being delimited by at least one face (34, 35) which extends in a plane perpendicular to the direction (14) of the shaft (13), the said face (34, 35) having a plurality of teeth (36).

10. Device according to any one of the preceding claims, in which the support (2) comprises a first branch (23) and a second branch (24) both of which start out from an end wall that forms part of the support (2) and extend in a direction parallel to an optical axis (16) of the lighting and/or signalling device (1).

11. Device according to Claim 10, in which the lamp unit (3) comprises a reflector (6) on the external wall of which is formed at least one peg (27) housed in a hole (25), the said hole being produced at the free end of at least one of the branches (23, 24).

12. Method of assembling a lighting and/or signalling device (1) according to any one of Claims 1 to 11, in which:
- the shaft (13) is subjected to a translational movement in the support (2) in a rectilinear direction (14),
- the shaft (13) is locked in the support (2) by means of a locking device (37),
- the lamp unit (3) is inserted into the support (2) in a direction (51) perpendicular to the direction (14) in which the shaft extends,
- the lamp unit (3) is secured to the support (2) and, at the same time, the shaping (22) is engaged on the screw thread (21).
